# EUROPÄISCHE PATENTSCHRIFT

(11) **EP 2 225 761 B1**
(45) Veröffentlichungstag und Bekanntmachung des Hinweises auf die Patenterteilung: **31.10.2012**
(21) Anmeldenummer: 08859047.6
(22) Anmeldetag: 02.12.2008
(51) Int. Cl.: G21C 9/06, G21C 19/317

(54) **SICHERHEITSSYSTEM FÜR EINE KERNTECHNISCHE ANLAGE**
SAFETY SYSTEM FOR A NUCLEAR POWER PLANT
SYSTÈME DE PROTECTION POUR CENTRALE NUCLÉAIRE

(30) Priorität: 11.12.2007 DE 102007059827
(43) Veröffentlichungstag der Anmeldung: 08.09.2010
(73) Patentinhaber: Areva NP GmbH, 91052 Erlangen (DE)
(72) Erfinder: ECKARDT, Bernd, 63486 Bruchköbel (DE); LOSCH, Norbert, 63071 Offenbach (DE)
(74) Vertreter: Tergau & Walkenhorst
(86) Internationale Anmeldenummer: PCT/EP2008/010196
(87) Internationale Veröffentlichungsnummer: WO 2009/074248

(56) Entgegenhaltungen:
- EP-A- 0 388 955
- EP-A- 0 779 627
- DE-A1- 4 125 085
- DE-A1-102006 010 826
- KUMAR R K ET AL: "HYDROGEN COMBUSTION MITIGATION CONCEPTS FOR NUCLEAR REACTOR CONTAINMENT BUILDINGS" NUCLEAR SAFETY, SUPERINTENDENT OF DOCUMENTS. WASHINGTON, US, Bd. 33, Nr. 3, 1. Juli 1992 (1992-07-01), Seiten 398-414, XP000372616 ISSN: 0029-5604

## Beschreibung

Die Erfindung bezieht sich auf ein Sicherheitssystem für eine kerntechnische Anlage mit einer Anzahl von katalytischen Rekombinatorelementen, die jeweils bei in einem anströmenden Gasstrom mitgeführtem Wasserstoff eine Rekombinationsreaktion mit Sauerstoff auslösen.

In einer kerntechnischen Anlage, insbesondere in einem Kernkraftwerk, muss bei Stör - oder Unfallsituationen, bei denen beispielsweise aufgrund von Kernauf-heizung eine Oxidation von Zirkonium auftreten kann, mit der Bildung und Freisetzung von Wasserstoffgas und Kohlenmonoxid innerhalb des den Reaktorkern umschließenden Sicherheitsbehälters oder Containments gerechnet werden. Insbesondere nach einem Kühlmittelverluststörfall können dabei große Mengen an Wasserstoff freigesetzt werden. Dadurch können innerhalb des Containments explosive Gasgemische entstehen. Ohne Gegenmaßnahme ist dabei die Anreicherung von Wasserstoff in der Containment-Atmosphäre soweit möglich, dass bei einer zufälligen Zündung durch die Verbrennung einer größeren Menge an Wasserstoff die Integrität des Sicherheitsbehälters gefährdet sein könnte.

Zur Verhinderung der Bildung derartiger explosiver Gasgemische im Containment eines Kernkraftwerks werden verschiedene Einrichtungen oder Verfahren diskutiert. Hierzu gehören beispielsweise Einrichtungen wie katalytische Rekombi-natoren, katalytisch und/oder elektrisch betriebene Zündeinrichtungen oder die Kombination der beiden vorgenannten Einrichtungen sowie Verfahren einer permanenten Inertisierung des Containments.
Beim Einsatz eines Zündsystems zur Beseitigung des Wasserstoffs aus der Atmosphäre des Containments soll eine zuverlässige Rekombination des Wasser-stoffs mit Sauerstoff mittels einer kontrollierten Verbrennung erreicht werden. Dabei soll ein signifikanter Druckaufbau als Folge einer virulenten Wasserstoffverbrennung sicher vermieden werden. Ein derartiges Zündsystem ist dabei üblicherweise derart ausgelegt, dass bereits beim Überschreiten der unteren Zündgrenze eines Gasgemisches, also bei einem Gasgemisch mit vergleichsweise geringer Wasserstoffkonzentration von z.B. 4 Vol% Wasserstoff, oder beim Unterschreiten der Inertisierungsgrenze von ca. 55 Vol % Dampf, eine Zündung des Wasserstoffs auslöst werden soll.

Das Dokument EP 0 388 955 offenbart ein Sicherheitssystem für eine kerntechnische Anlage mit einer Mehrzahl von katalytischen Rekombinatorelementen, die jeweils bei in einem anströmenden Gasstrom mitgeführtem Wasserstoff eine Rekombinationsreaktion mit Sauerstoff auslösen, wobei die Rekombinatorelemente auch als Zündelemente geeignet sind).

Ein aus der EP 289 907 B1 bekanntes Zündsystem zur gesteuerten Zündung eines Wasserstoff enthaltenden Gasgemischs umfasst einen Funkenzünder, der über einen integrierten Energiespeicher bespeisbar ist. Das Zündsystem ist dabei mit einem autark ausgelegten Energiespeicher versehen, so dass keine Zuleitungen erforderlich sind. Als Energiespeicher ist dabei insbesondere eine Trockenbatterie vorgesehen. Allerdings ist dieses Zündsystem aufgrund der Kapazität des integrierten Energiespeichers lediglich für eine begrenzte Laufzeit geeignet. Insbesondere bei einer frühzeitigen Anregung des Funkenzünders ist bei einem Störfallverlauf mit späterer Wasserstofffreisetzung eine gesteuerte Zündung des Wasserstoffs nur eingeschränkt möglich. Zudem reagiert dieses Zündsystem ebenfalls erst nach Ablauf einer Zündverzugszeit auf die Freisetzung von Wasserstoff. Auch ist ein Langzeitbetrieb des Zündsystems, der zur Abdeckung aller denkbaren Störfallsszenarien erforderlich wäre, nur mit Einschränkungen möglich. Weiterhin ist eine vorsorgliche Anregung des Zündsystems bereits im Vorfeld eines sich anbahnenden Störfalles von einer externen Station, wie beispielsweise der Leitwarte einer Kraftwerksanlage, aus nicht möglich.

Darüber hinaus besteht bei ausschließlich auf dem Einsatz von Zündverfahren für den Wasserstoff, beispielsweise in Form von Zündkerzensystemen, beruhenden Sicherheitssystemen die zusätzliche Einschränkung, dass in dampfinerten Situationen keinerlei Wasserstoffabbau betrieben werden kann. Dementsprechend kann im Sicherheitsbehälter anfallender Wasserstoff bei derartigen Systemen erst nach entsprechender Dampfkondensation vollständig verbrannt werden. Dies kann bei Wasserstoffanreicherung im Dampf zu vergleichsweise hohen Wasserstoffmengen oder-konzentrationen führen, die dann in Folge der Zündung in vergleichsweise kurzer Zeit verbrannt werden, so dass unkontrollierte Reaktionsabläufe entstehen könnten. Zudem ist bei ausschließlich auf Zündung beruhenden Systemen zu berücksichtigen, dass bei sogenannten "Station-black-out"-Szenarien, also Szenarien mit vollständigem Verlust der Energieversorgung innerhalb des Containments, die Zündung komplett ausfallen könnte.

Alternativ oder ergänzend können daher im Rahmen eines Sicherheitssystems im Sicherheitsbehälter oder Containment einer kerntechnischen Anlage so genannte passive autokatalytische Rekombinatoren angeordnet sein. Diese umfassen üblicherweise geeignete Katalysatorelemente, die auf katalytischem Wege bei in einem anströmenden Gasstrom mitgeführtem Wasserstoff eine Rekombinations-reaktion mit Sauerstoff auslösen. Die Katalysatorelemente sind dabei üblicherweise mit einem umgebenden Gehäuse versehen, wobei das Gehäuse in der Art eines Kamins derart ausgestaltet ist, dass aufgrund der Kaminwirkung selbsttätig eine Konvektionsströmung innerhalb des Gehäuses entsteht, so dass das Gasgemisch zuverlässig am jeweiligen Katalysatorelement entlang geführt wird und somit die katalytische Rekombinationsreaktion aufrechterhalten werden kann. Die eigentlichen katalytischen Elemente sind hierbei innerhalb des jeweiligen katalytischen Rekombinatorelements vorwiegend vertikal und weitgehend parallel angeordnet, um zwischen den Elementen den Auftrieb zu erzeugen und zu begünstigen. Bei Anfall von Wasserstoff im Gasgemisch des Containments starten diese Einrichtungen üblicherweise selbsttätig und oxidieren den Wasserstoff mit in der Atmosphäre enthaltenem Sauerstoff, so dass insbesondere auch bei Vorliegen von dampfinerten Bedingungen oder leicht oberhalb der Zündgrenze liegenden Gasgemischen ein wirksamer Wasserstoffabbau ohne Zündung erreicht werden kann.

Allerdings können auch in derartigen Systemen bei postulierten Störfallszenarien mit hohen Wasserstoff- Freisetzungsraten und gleichzeitig geringen Dampfkon-zentrationen im Sicherheitsbehälter lokal oder global kritische Konzentrationen und Mengen an anfallendem Wasserstoff erreicht werden.

Da Zündungen an Rekombinatoren bislang nur zufällig, bei unterschiedlichen Atmosphärenbedingungen, wie Wasserstoff-Konzentrationen und Dampfanteilen etc. beobachtet wurden, ist weder eine zuverlässige Vermeidung ungewollter Zündungen noch eine Sicherstellung der Zündfunktion durch solche Einrichtungen gegeben. Auch führten Maßnahmen zur völligen Vermeidung von Katalysatorzündungen wie beispielsweise unterschiedliche Beschichtungsdichten oder Diffusionshemmschichten oder dergleichen nicht zum sicheren Ausschluss von Zündungen. Selbst wenn dieser Nachweis gelungen wäre, sind zufällige Zündungen aufgrund anderer denkbarer unstetiger Zündquellen im Containment nicht generell ausschließbar.

Zur sicherheitstechnischen Auslegung eines Containments wird daher bei der Verwendung katalytischer Rekombinatoren jeweils die bei einer Wasserstoff-Überspeisung auftretende maximale Konzentration im Sicherheitsbehälter ermittelt und unter diesen Bedingungen eine Zündung, mit entsprechend langen Flammbeschleunigungswegen durch den Sicherheitsbehälter, unterstellt. Bei derartigen Zündszenarien ist mit der Ausbildung von schnellen Deflagrationen bis möglicherweise hin zu Deflagrations-Detonations-Übergängen zu rechnen. Um selbst die dabei theoretisch auftretenden erheblichen Lasten und Differenzdrücke von bis zu mehreren bar durch die strukturelle Auslegung des Containments geeignet kompensieren zu können, werden die entsprechenden Strukturen des Containments sowie die darin vorgesehenen Einbauten üblicherweise entsprechend massiv ausgelegt. Wünschenswert wäre daher eine abgewandelte Auslegung eines Sicherheitssystems, bei dem selbst bei den genannten Bedingungen zuverlässig eine zu große Anreicherung von Wasserstoff in der Atmosphäre von vornherein ausgeschlossen und somit die genannten Zünd- oder Detonationsszenarien sicher vermieden werden können.

Um derartigen Bestrebungen entgegen zu kommen, können auch kombinierte Systeme vorgesehen sein, die sowohl Zünder als auch katalytische Rekombinatoren umfassen. Aus der EP 596 964 B1 ist beispielsweise ein kombiniertes Katalysator-Zündsystem zur Rekombination von Wasserstoff in einem Gasgemisch bekannt. Bei diesem System wird bei der katalytischen Rekombination von Wasserstoff die an einem Katalysatorkörper gewonnene Wärme einer Zündvorrichtung zugeleitet und dort zur direkten Zündung von nicht abgereicherten wasserstoffhaltigen Gasen verwendet. Bei einem derartigen kombinierten Katalysator-Zündsystem tritt die Zündung des Wasserstoffs jedoch erst nach dem Ablauf einer Zündverzugszeit nach der Freisetzung des Wasserstoffs ein. Nach der ersten Freisetzung des Wasserstoffs ist nämlich eine gewisse Zeit erforderlich, bis sich der Katalysatorkörper und das angrenzende Zündsystem hinreichend erwärmt hat, um eine Zündung des Wasserstoffs zu ermöglichen. Diese Zeitverzögerung führt dazu, dass bei schnellen Gasverschiebevorgängen innerhalb des Containments die Zündung des Wasserstoffs erst bei vergleichsweise hohen Wasserstoffkonzentrationen einsetzt. Nach Erwärmung des kompletten Systems tritt dann jedoch an den nichtkatalytischen Teilen eine frühe Zündung bereits nach Überschreiten der unteren Zündgrenze auf.

In anderen kombinierten Systemen mit katalytischen Rekombinatoren und mit einer Vielzahl von autonomen Funkenzündern, bei denen die Zündung unabhängig von der katalytischen Rekombination in der Zündeinrichtung eingeleitet wird, ist mit vergleichsweise großem Aufwand durch eine entsprechende Abstimmung der Systeme aufeinander zu rechnen und insbesondere die Handhabung ungünstiger Auswirkungen bei falscher Zündfrequenz problematisch. Im Prinzip gilt hier wiederum, dass frühe Einzelzündungen mit entsprechenden Gasverschiebevorgängen ausgelöst werden, ohne dass - aufgrund der fehlenden Hochtemperaturregionen - wirksame Gegenzündungen zur Sicherstellung kurzer Flammbeschleunigungswege, ermöglicht werden.

Der Erfindung liegt daher die Aufgabe zugrunde, ein Sicherheitssystem der oben genannten Art anzugeben, mit dem auch unter Zugrundelegung von vergleichsweise extremen Bedingungen oder Szenarien der genannten Art mit besonders hoher betrieblicher Sicherheit eine verlässliche Beseitigung des Wasserstoffs aus dem Gasgemisch gewährleistet ist.

Diese Aufgabe wird erfindungsgemäß gelöst, indem eine Mehrzal von Rekombinatorelemente, die als Zündelemente geeignet sind; innerhalb des Sicherheitsbehälters oder Containments gasseitig verbindenden Strömungswege derart ausgestaltet sind, dass ein durch eine Zündung bei der Rekombinationsreaktion in einem ersten Rekombinatorelement im Gasmedium ausgelöster Druckpuls im Anströmbereich eines zweiten, benachbarten Rekombinatorelements einen Gasverschiebevorgang mit einer Strömungsgeschwindigkeit von mindestens 5 m/s auslöst, der eine verstärkte Aufheizung des zweiten Rekombinatorelements und dadurch eine Zündang des Gasstroms noch vor Eintreffen der Flammenfront am zweiten Rekombinatorelement bewirkt. Die auslegungsgemäß gewünschte Strömungsgeschwindigkeit im Anströmbereich sollte dabei vorzugsweise die doppelte, im Konvektionsbetrieb herrschende Anströmgeschwindigkeit überschreiten.

Die Erfindung geht dabei von der Überlegung aus, dass eine zuverlässige Beseitigung des Wasserstoffs unter den genannten möglicherweise extremalen Bedingungen unter zuverlässiger Vermeidung der Ausbildung kritischer Konzentrationen und unter konsequentem Ausschluss von Detonations-Szenarien erreichbar ist, indem ein im Wesentlichen auf einer katalytischen Rekombination beruhendes System in besonders geeigneter Weise durch gezielt eingeleitete Zündungen ergänzt wird. Dazu sollte auch das Zündsystem zur Einhaltung besonders hoher betrieblicher Sicherheitsstandards und auch zur Beherrschung von "Black-out"-Szenarien vollständig oder zumindest weitgehend passiv ausgebildet sein. Eine derart gezielte Ergänzung eines aus katalytischen Rekombinatoren beruhenden Systems durch geeignete Zündmechanismen ist erreichbar, indem in besonders geeigneter Weise die bei der katalytischen Rekombination lokal im Bereich der Katalysatorelemente freigesetzte Wärme zur gezielten Einleitung von Zündungen genutzt wird.

Das System sollte dabei in seiner Gesamtheit insbesondere derart ausgelegt sein, dass auch bei trockenen Szenarien, mit moderater Wasserstofffreisetzung und vergleichsweise geringen Dampfanteilen, frühzeitig ein flammloser katalytischer Wasserstoffabbau eingeleitet und noch bis in bereits zündfähige, jedoch unkritische Konzentrationen von beispielsweise 6 bis etwa 8 Vol % Wasserstoff hinein fortgesetzt wird. Dieser flammlose Rekombinatorbetrieb soll bei höheren Dampfkonzentrationen von z.B. > 30 Vol % bis ca > 8 Vol% Wasserstoffkonzentration, bei > 40 Vol % vorzugsweise bis etwa 10 Vol% und mehr Wasserstoffkonzentration, ausgedehnt werden. Hierdurch wird erreicht, dass in einer Vielzahl von Szenarien überhaupt keine Zündung auftritt.

Erst in extremeren Szenarien, insbesondere bei Auftreten von relevanten WasserstoffMengen mit Konzentrationen oberhalb von etwa 8 Vol.-% bei wenig Dampfanteil, in jedem Fall jedoch bei Wasserstoffkonzentrationen von mehr als 10 Vol.-%, sollte vorsorglich ein weiterer Konzentrationsanstieg verhindert und gezielt selbsttätig eine Zündung in den verschiedenen Raumbereichen des Sicherheitsbehälters ausgelöst werden. Die genannten Grenzkonzentrationen beziehen sich dabei insbesondere auf Atmosphärentemperaturen von bis zu ca. 100°C. Bei höheren Temperaturen ist weiterhin zu beachten, dass das Zündgebiet sich an der unteren und oberen Zündgrenze eines Wasserstoffgemisches noch ausweitet und damit eine noch frühere, sichere Zündung ermöglicht wird.

Um dies gezielt sicherzustellen, ist nunmehr vorgesehen, mittels einer geeigneten strukturellen Positionierung der Katalysatorelemente zueinander und einer geeigneten strukturellen Auslegung, insbesondere hinsichtlich Vorgabe der Strömungswege und Dimensionierung der dafür vorgesehenen Komponenten, gezielt das Anströmverhalten eines Gasstroms im Einströmungsbereich der jeweiligen katalytischen Elemente einzustellen.

Dabei liegt die Erkenntnis zugrunde, dass bei einem katalytischen Rekombinator der genannten Art, bei dem, beispielsweise in Folge von Kaminwirkungen oder dergleichen, der Gasstrom mit einer bestimmten Strömungsgeschwindigkeit an den katalytischen Elementen entlang geführt und damit die Rekombinationsreaktion eingeleitet und aufrechterhalten wird, im Gleichgewichtszustand des Katalysators eine Abreicherung des Wasserstoffanteils im Gasstrom unmittelbar benachbart zu den katalytisch aktiven Oberflächen erfolgt. Dies ist eine Folge der Rekombinationsreaktion, die unmittelbar im Grenzbereich der katalytisch aktiven Oberfläche zum vorbei geführten Gasstrom aufgrund der Umsetzung des dort mitgeführten Wasserstoffs mit Sauerstoff zu einer lokalen Verarmung des Wasserstoffanteils in unmittelbarer Nähe zum Katalysator führt. Die durch die katalytische Rekombinationsreaktion erzeugte Wärme, die den Katalysator entsprechend aufheizt, kann also in einem derartigen Gleichgewichtszustand nur dann zu einer Zündung des umströmenden Gasstroms führen, wenn selbst in der verarmten Zone noch ein im Hinblick auf die im Katalysatorelement herrschende Temperatur zur Zündung ausreichender Wasserstoffanteil des Gasgemischs vorliegt.

Mit Instabilitäten bei derartigen Systemen ist somit insbesondere dann zu rechnen, wenn lokal innerhalb des Containments an einer beliebigen Stelle aufgrund beliebiger Ursache, beispielsweise durch eine gewollte Zündung mittels Zündern, durch Zündung mittels anderer elektrischer Einrichtungen, durch eine initiale Zündung an einem der Rekombinatoren oder auch durch transiente Gaseinspeisevorgänge wie beispielsweise Dampfstöße bei plötzlicher Kühlwassereinspeisung auf überhitzte Einbauten, eine Zündung erfolgt und sich hierdurch bedingt eine Flammenfront entlang der Strömungswege im Containment ausbreitet. Sobald diese Flammenfront bei einem anderen Rekombinator eintrifft, wird lokal die für eine Zündung des Gasgemischs im Umgebungsbereich dieses zweiten Rekombinators, also in der genannten Verarmungszone, erforderliche Zündtemperatur überschritten, und die Zündung auch in diesem Raumbereich initiiert. Gerade ein derartiges Übersprechen von Zündeffekten in Folge einer Verbreitung durch langlaufende Flammenfronten kann zu ungewollten Flammbeschleunigungen und den genannten Instabilitäten führen, die im ungünstigsten Fall zu einer Detonation oder dem genannten Deflagrations-Detonations-Übergang führen könnten.

Um diesen Effekten gezielt zu begegnen, sollten die Strömungswege zwischen einzelnen Rekombinatorelementen und/oder diese selbst daher gezielt dafür ausgelegt sein, eine Zündung auch im Umgebungsbereich des zweiten Rekombinators vorsorglich bereits dann auszulösen, wenn die Flammenfront vom ersten Rekombinator noch nicht eingetroffen ist, so dass die Zündung im Umgebungsbereich des zweiten Rekombinators entsprechend kontrolliert und unter Vermeidung wechselweiser Beeinflussungen ablaufen kann. Um dies zu erreichen, sollten die Strömungswege zwischen den einzelnen Rekombinatoren derart ausgelegt sein, dass eine Zündung im jeweils zweiten Rekombinator bereits aufgrund eines Druckpulses oder eines Gasverschiebevorgangs, der der genannten Flammenfront voranschreitet, ausgelöst wird. Dies ist möglich, indem der genannte Druckpuls oder Gasverschiebevorgang gezielt dazu genutzt wird, die genannte Verarmungszone in der unmittelbaren Umgebung des jeweils zweiten Katalysatorelements aufzubrechen, so dass Gasanteile mit nicht abgereichertem Wasserstoffanteil in unmittelbaren Kontakt zum jeweiligen Katalysatorelement kommen können. Aufgrund des nicht abgereicherten Wasserstoffanteils kann in derartigen Situationen die sich ohnehin im Katalysatorelement einstellende Temperatur bereits als Zündtemperatur ausreichen, so dass die hierdurch ausgelöste Zündung unabhängig von der Flammenfront und somit ohne die genannten und zu vermeidenden Übersprecheffekte in kontrollierter Weise eingeleitet werden kann. Somit wird die Energie aus der anlaufenden Verbrennung durch gezielt partielle Einleitung in eine temperierte passive katalytische Einrichtung zur Gegenzündung, Explosionsmilderung oder Löschung genutzt.

Um dies zu gewährleisten, sollten die Rekombinatorelemente derart geeignet relativ zueinander positioniert und/oder über geeignet vorgegebene und strukturierte Strömungswege miteinander verbunden sein, dass die durch die genannten Gasverschiebevorgänge erzeugten Strömungsgeschwindigkeiten des am zweiten Rekombinator eintreffenden Gasstroms ausreichen, um die genannte Verarmungszone aufzubrechen und das Gemisch mit nicht abgereicherten Wasserstoffanteil in unmittelbarer Nähe des Katalysatorelements zu führen.

Bei der Ausgestaltung der Rekombinatoranordnung werden vorteilhafterweise weiterhin auch die konzentrationsabhängigen Flammlaufwegrichtungen berück-sichtigt. Vertikal nach oben ist hierbei bei geringen Konzentrationen der grund-sätzlich bevorzugte Flammlaufweg. Bei horizontaler Flammausbreitung sind bereits etwas höhere Konzentratrion und bei Flammausbreitung nach unten sogar ca. 2 - 3 Vol% höhere Mindestkonzentrationen zu berücksichtigen.

Als geeignetes Auslegungskriterium für das gesamte Konzept ist eine auslegungsgemäß geeignete Wahl der Strömungsgeschwindigkeit vorgesehen, die ein Gasverschiebevorgang im Anströmbereich eines zweiten, benachbarten Rekombinatorelements, hervorgerufen durch einen durch eine Zündung bei der Rekombinationsreaktion in einem ersten Rekombinatorelement im Gasmedium ausgelösten Druckpuls, aufweist.
Vorteilhafterweise ist in der Art eines geeigneten Auslegungskriteriums für das Gesamtsystem als Strömungsgeschwindigkeit für den ausgelösten Gasverschiebevorgang eine Geschwindigkeit vorgegeben, durch die die genannte Gasschichtung in der unmittelbaren Umgebung des jeweiligen Katalysatorelements mit besonders hoher Zuverlässigkeit aufgebrochen wird. Dies kann durch eine auslegungsbedingt vorgegebene Mindestgeschwindigkeit von 5 m/s, die insbesondere mehr als der doppelten Anströmgeschwindigkeit im Konvektionsbetrieb entspricht, bereits erreicht werden. Vorteilhafterweise ist dazu aber als Strömungsgeschwindigkeit mindestens eine Nenngeschwindigkeit von 10 m/s vorgegeben. Das Verfahren liefert weiterhin auch beim Auftreten von hohen Gasgeschwindigkeiten, von z. B. >50 m/s, höheren Drücken und Dampfkonzentrationen und mehr, sehr zuverlässige spontane Zündungen. Der hierbei auftretende Kühleffekt, bedingt durch die massiv einströmenden kühlere Umgebungsgase und die Umgebungsbedingungen, kann zuverlässig durch eine entsprechende Temperierung der Massen in der Einrichtung kompensiert werden.
Als geeignete Parameter, über die die gewünschte auslegungsbedingte Anströmgeschwindigkeit insbesondere beeinflussbar ist, kommen insbesondere unmittelbare Gestaltungsmerkmale der katalytischen Rekombinatorelemente an sich, also beispielsweise die Kanalführung innerhalb des jeweiligen Gehäuses, die dabei vorgesehenen Kanalquerschnitte, Kanallängen der einzelnen Elemente und dergleichen, aber auch Art und Form der Kanalführung (geradlinig oder gekrümmt etc.) sowie geeignete Drosselmassnahmen und dergleichen in Betracht. Alternativ oder zusätzlich kann aber auch über analoge Beeinflussung der Strömungswege zwischen einzelnen Rekombinatorelementen eine entsprechende Anpassung erfolgen.

Hierbei kann die Strömungsweiterleitung bei den Verbrennungsvorgängen gezielt durch Gebäude- und Komponentenstrukturen im Sicherheitsbehälter oder auch in teilweise oder voll geschlossenen Kanal- oder Rohrleitungssystemen erfolgen. Solche zusätzlichen Kanal- oder Rohrsysteme können auch zur Initiierung einer gewollten Zündung genutzt werden. Hierbei wird dieses System günstigerweise noch mit einem Druckpulsgeber oder Speicher ausgestattet, welcher durch Betätigung den Gasverschiebevorgang an der Rekombinationseinnrichtung zum Zwecke der Zündung auslöst.

Die Rekombinatoranordnung erfolgt vorteilhafterweise nach bestimmten den angestrebten Zündmechanismus begünstigen den Abstands-, Volumen- und Gebäudestrukturkriterien im Containment oder Reaktor-Sicherheitsbehälter. Günstig ist beispielsweise die Anordnung der Rekombinatoren verstärkt, also mit einem Anteil von beispielsweise mindestens 70%, in einem Bereich ¼ bis ¾ der Containmentgebäudehöhe. Die Anordnung mit erhöhter Rekombinatordichte erfolgt weiterhin vorzugsweise im potentiellen Wasserstofffreisetzungsbereich, nahe des Hauptkreislaufes, in einem Containmentvolumen von ca. 20 - 50 % des Gesamtvolumens sowie in Bereichen mit stärkerer Raumunterteilung. Günstiger-weise wird hier ein Rekombinatorelement pro 300 bis 1500 m³ Gebäudevolumen angeordnet. Weiterhin wird hier vorteilhafterweise ein Abstandskriterium von < 15m, vorzugsweise < 10 m, unter Berücksichtigung der Gebäudestruktur, zwischen den Einheiten angewandt, um Flammbeschleunigungseffekte zu minimieren. Die angegebenen Abstände bezeichnen dabei insbesondere die Länge des vorgesehenen Gasströmungswegs zwischen zwei Rekombinatoreinheiten.

Da im gewählten Konzentrationsbereich vorwiegend eine Flammpropagation in aufsteigende Richtung erzeugt wird, erfolgt die Rekombinatoranordnung bevorzugt oberhalb des Hauptkreislaufes, um eine besonders effiziente Verfahrensausführung zu gewährleistet.

Hingegen werden vorzugsweise im äußeren, eher freien Bereich des Sicherheitsbehälters insbesondere wegen der dort deutlich geringeren Konzentrations-gradienten und kaum vorhandener Turbulenzgeneratoren deutlich größere Abstände zwischen den Rekombinatorelementen von bis zu 25m, vorzugsweise < 15m, realisiert. Weiterhin wird hier vorzugsweise ein Gebäudevolumen von 1000 bis 5000 m³ pro Rekombinator gewählt.

Die Anordnung der Rekombinatoren nach diesem Verfahren erfolgt weiterhin vorzugsweise im Bereich des Hauptkreislaufes als fortlaufende Kette sowie konvektionsunterstützend in den Bereich der lokalen und globalen Strömungspfade.

Die Anordnung der Rekombinatoren erfolgt zusätzlich vorteilhafterweise unter Berücksichtigung der Raumgeometrien und des Verblockungsgrades in den jeweiligen Strömungspfaden, wobei Verblockungen insbesondere durch dort angeordnete weitere Komponenten oder Einbauten entstehen könnten. Hierbei sind im Grundsätzlichen die Flamm- und Volumenausbreitungseffekte, wie z.B. eher zwei oder dreidimensionale Ausdehnung sowie Turbulenzgeneratoren im Raum und dämpfende Kühleffekte von Gebäudestrukturen, zu berücksichtigen.

Bei sich nur unwesentlich aufweitenden Räumen sollte vorzugsweise ein größerer Rekombinatorabstand von bis zu 10 m, bei sich stark aufweitenden Räumen aber vorzugsweise ein geringerer Rekombinatorabstand von < 7 m eingehalten werden.

Bereiche mit Raumverblockungsfaktoren von > 0.2 bis < 0.5, in Kombination mit den gewählten mittleren Konzentrationsbereichen, sind besonders günstig für die Rekombinatoranordnung. Hier erfolgt die Anordnung vorteilhafterweise in der Nähe geschwindigkeitsrelevanter Raumüberströmbereiche vor oder nach Überströmöffnungen, insbesondere im Einström -oder Freistrahlbereich oder in Gebieten mit erhöhter Turbulenz. Durch die frühzeitige Gegenzündung wird gerade bei diesen langsameren Flammgeschwindigkeiten in diesem besonders kritischen Flammbeschleunigungsbereich eine starke Flammbeschleunigung, bis hin zu schnellen Deflagrationen, sicher vermieden. Bei sehr starker Raumverblockung > 0,5 wird die Rekombinatoranordnung bevorzugt nach dem Hindernis und/oder außerhalb des Kernstrahlbereiches der Strömung vorgenommen.

Hierbei wird der nächste Rekombinator bei längeren Anlaufstrecken günstigerweise vor einer relevanten Raumverblockung, bei kürzeren Anlaufstrecken auch im Abströmbereich hinter der Raumverblockung, platziert.

In weiterer vorteilhafter Ausgestaltung ist das Sicherheitssystem auch für eine besonders wirksame Einbindung der vorgesehenen, infolge der eintretenden Erwärmung und der Anregung durch den Druckpuls erwünschten gezielten Zündung des Gasgemisches ausgelegt. Unter Berücksichtigung der Korrelation zwischen Wasserstoffkonzentration und zugeordneter Zündtemperatur ist hierfür das System in besonders vorteilhafter Ausgestaltung dafür ausgelegt, dass im Naturkonvektionsbetrieb des oder jedes Rekombinatorelements eine Zündung im umströmenden Gasstrom erst dann ausgelöst wird, wenn der Anteil an mitgeführtem Wasserstoff mindestens 6%, vorzugsweise mindestens 8%, bei atmosphärischen Bedingungen und bis ca. 100°C Umgebungstemperatur, beträgt. Zur Auslegung der jeweiligen Komponenten kann hierzu insbesondere die thermische Trägheit der Katalysatorelemente und die Kühlwirkung eines an der Oberfläche entlangstreichenden Gasstroms berücksichtigt sein, wobei die sich auslegungsbedingt einstellende Temperatur des jeweiligen Katalysatorelements insbesondere durch Variation der Masse, Dicke oder lateralen Ausdehnung des eigentlichen Katalysatorkörpers verändert werden kann.

In weiterer, besonders vorteilhafter Ausgestaltung ist ein Gebäudesprühsystem, insbesondere zur bedarfsweisen Dampfkondensation in der Containment-Atmosphäre, vorgesehen. In bestimmten Betriebsfällen kann durch diese Kombination mit einem Gebäudesprühsystem die Vergleichmäßigung der Containmentatmosphäre und die gezielte Reduzierung des H₂- und/oder Dampfanteiles abgestimmt und synchronisiert erfolgen.

Bei gezielter Dampfkondensation und Erreichen des nichtinerten Konzentrationsbereiches, von z.B. ca. < 50 bis 55 Vol% Dampf und CO₂, bei nunmehr weitgehend homogenen Konzentrationen, kann somit nahe an der Inertisierungsgrenze ebenfalls sicher die Zündung - auch bei höheren Wasserstoff-Konzentrationen - im Bereich der langsamen Deflagration mit Gegenzündung ausgelöst werden.
Durch die Kombination der in verschiedenen Raumbereichen angeordneten Rekombinationseinrichtungen mit dem Betrieb eines Containmentspraysystems kann im dampfinerten Bereich eine intensive Mischung der Atmosphäre durch Sprühen einerseits und die austretenden Rekombinatorkonvektionsströme andererseits erfolgen sowie gleichzeitig eine Reduktion des Wasserstoff-Anteils erreicht werden. Insbesondere werden hierdurch mögliche kritische Hochkonzentrationswolken mit relevantem Potential zur Flammbeschleunigung kurzfristig mit der restlichen Atmosphäre vermischt und weiterhin die verschiedenen Hochtemperatur-Sollzündzonen auf ein einheitlicheres Niveau gebracht. Hierbei können besonders ausgeprägte Hochtemperaturen in den entsprechend im Gebäude angeordneten Soll-Zündzonen von > 700°C, vorzugsweise > 800°C, eingestellt werden. Das Verfahren liefert aufgrund der ausgeprägte Hochtemperaturzone, auch beim Auftreten von hohen Gasgeschwindigkeiten, von z. B. >50 m/s und mehr, sehr zuverlässige spontane Zündungen. Der hierbei auftretende Kühleffekt, bedingt durch die massiv einströmenden kühlere Umgebungsatmosphäre, kann durch die vorliegende Temperierung der Massen sicher kompensiert werden.
Durch entsprechende Ausgestaltung des Betriebes des Spraysystems kann weiterhin die Kondensationswirkung bedarfsweise entsprechend verlangsamt, z.B. mit einer Dampfkondensationsrate von <1 Vol % /min, erfolgen, so dass vorlaufend die Atmosphären-Vergleichmäßigung und ein Wasserstoff-Abbau sichergestellt ist. Bei entsprechend hohen Temperaturen, vorzugsweise > 800°C in den Soll-Zündzonen der entsprechend angeordneten Rekombinatoren, kann auch ein direktes Einleiten des Sprühens oder Sprayens zum Zwecke der Deinertisierung erfolgen und, insbesondere bei erhöhter Leckagewahrscheinlichkeit des Containments oder beim Annähern an die Überdruckauslegungswerte, der Containmentdruck schnell abgesenkt sowie die besonders zuverlässige Wirkung der Verfahrens mit Einleitung von langsamen Deflagrationen mit Gegenzündung gewährleistet werden.

Die mit der Erfindung erzielten Vorteile bestehen insbesondere darin, dass durch die strukturelle Ausgestaltung der Rekombinatoreinrichtungen und/oder der diese verbindenden Strömungswege sichergestellt ist, dass der bei einem Rekombinatorelement in Folge einer Zündung an einem anderen Rekombinatorelement eintreffende Druckpuls oder Gasverschiebevorgang im Einströmbereich des Rekombinatorelements derart hohe Gasströmungsgeschwindigkeiten erzeugt, dass die in unmittelbarer Nähe der katalytischen Oberfläche befindliche Gasschicht mit abgereichertem oder vermindertem Wasserstoffgehalt aufgebrochen wird.

Dadurch kann nunmehr nicht oder nur wenig abgereichertes Gas direkten Kontakt mit den vergleichsweise heißen Oberflächen des katalytischen Elements bekommen, so dass hierdurch zuverlässig eine Zündung in diesem Raumbereich ausgelöst wird. Dadurch, dass bei langsamen Deflagrationen die dabei erzeugten Druckwellen mit vergleichsweise langer Schwingungsdauer und geringer Amplitude der entsprechenden Flammenfront voran laufen, wird somit durch die hierdurch bewirkten Gasverschiebevorgänge die Zündung im Rekombinator ausgelöst, bevor die Flammenfront eintrifft. Die massive Brenngaszufuhr führt somit zu einer Überspeisung der lokalen Rekombinatoreinrichtung und zu einer Minimierung der Konzentrationsabreicherung im Grenzschichtbereich der Heizflächen und an der Phasengrenze zu einer Grenzflächenstörung, so dass zusätzlich weitere konvektive Ströme hervorgerufen und eine sichere Zündung ermöglicht werden. Damit ist eine Sicherheitszündung kritischer Bereiche vor einer weiteren Konzentrationserhöhung sichergestellt, wobei in der Art eines Dominoeffekts oder einer Dominozündung ausgehend von einer ersten Rekombinatoreinrichtung Zündungen in benachbarten oder sich strömungsseitig anschließenden Rekombinatoreinrichtungen sicher ausgelöst werden. Übersprecheffekte und unkontrollierte Strömungsverhältnisse können dadurch sicher vermieden werden, so dass eine Minimierung der in Kauf zu nehmenden Lasten erfolgt.
Dementsprechend kann das System in seiner Gesamtheit mit einem Schwerpunkt auf der katalytischen Funktion des Wasserstoffabbaus ausgelegt sein, wobei in vergleichsweise vielen Szenarien, also insbesondere bei Konzentrationen von weniger als 8 Vol.-%, vorzugsweise weniger als 6 Vol.-%, unter Verzicht auf Zündungen ein Wasserstoffabbau ausschließlich katalytisch erfolgen kann. Bei höheren Konzentrationen erfolgen Zündungen und Verbrennungsvorgänge primär im Konzentrationsbereich oder Anlaufbereich von langsamen Deflagrationen, wobei sichere Zündvorgänge in benachbarten Einrichtungen in Folge der den Verbrennungswellen oder Flammenfronten mit Abstand vorlaufenden Gasverschiebevorgänge eingeleitet werden.

Somit ist im Konzentrationsbereich von z.B. 5 bis etwa 8 Vol% grundsätzlich eine flammlose katalytische Oxidation durch frühzeitige Zündung und damit auch ein vorteilhafter flammloser katalytischer Abbau bei höheren Konzentrationen sowie die gleichzeitige Schaffung von Hochtemperaturregionen (> 600 - 900°C) ermöglicht. Der Bereich der flammlosen Katalyse ist damit über den ohnehin nichtzündbaren Bereich ausgedehnt. Bei leichten Konzentrationsunterschieden werden frühzeitige Einzelzündungen mit schnellen Gasverschiebevorgängen vermieden, so dass bei eingehenden Zündungen eine wirksame Gegenzündung zur Erreichung kurzer Flammbeschleunigungswege ermöglicht wird.

Die duale Wirkung des Verfahrens erweist sich insbesondere im dampfinerten Bereich, bei ca. > 55 Vol % Dampf CO₂ Anteil, als vorteilhaft, da durch die flammlose Oxidation bereits gravierend Wasserstoff abgebaut werden kann und gleichzeitig die Schaffung entsprechend hoher Temperaturpotentiale, von z.B. > 600°C, insbesondere jedoch, an der von den Zündbedingungen gesehen schwierigeren oberen Zündgrenze, auch Temperaturpotentiale von >900°C, möglich werden. Durch diese hohen Temperaturen kann die aufgrund der hohen Dampfanteile und Druckbedingungen auftretende erhöhte Wärmeableitung im Zündzonenbereich kompensiert werden und auch unter diesen Bedingungen die sichere Zündung erfolgen.

Ein Ausführungsbeispiel der Erfindung wird anhand einer Zeichnung näher erläutert. Darin zeigen:
- Figur 1: ein Sicherheitssystem zur Rekombination von Wasserstoff und Sauerstoff in einem Gasgemisch,
- Figur 2: einen katalytischen Rekombinator, und
- Figur 3: im vergrößerten Ausschnitt einen Teil des Sicherheitssystems nach Figur 1.

Gleiche Teile sind in allen Figuren mit denselben Bezugszeichen versehen.

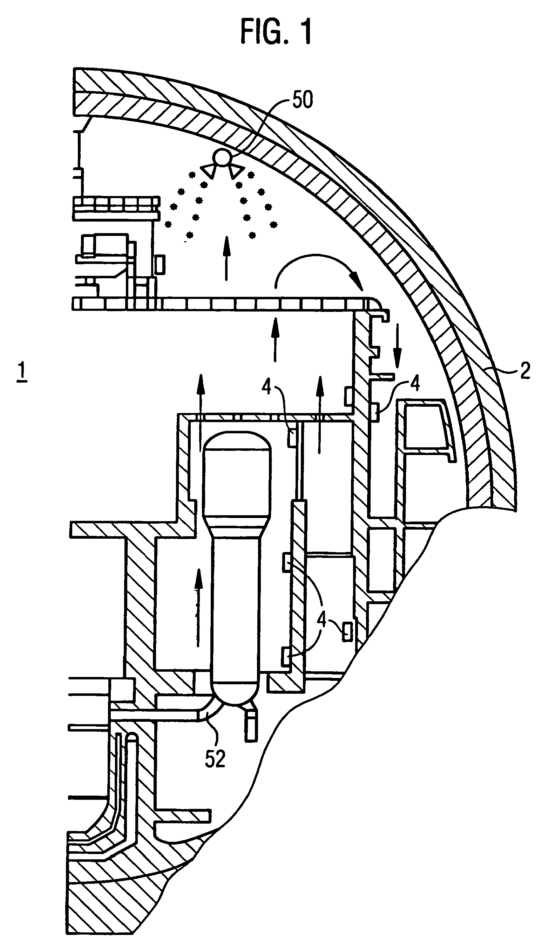

Das Sicherheitssystem 1 gemäß Figur 1 ist zur Rekombination von Wasserstoff in einem Gasgemisch, nämlich in der Containment-Atmosphäre eines in Figur 1 auszugsweise dargestellten Sicherheitsbehälters 2 einer kerntechnischen Anlage, vorgesehen. Das Sicherheitssystem 1 umfasst dazu eine Anzahl von innerhalb des Sicherheitsbehälters 2 angeordneten katalytischen Rekombinatoren 4, von denen jeder auf katalytischem Wege eine Rekombinationsreaktion von in einem vorbeiströmenden Gasstrom mitgeführtem Wasserstoff mit in der Containment Atmosphäre enthalte nem Sauerstoff auslöst.

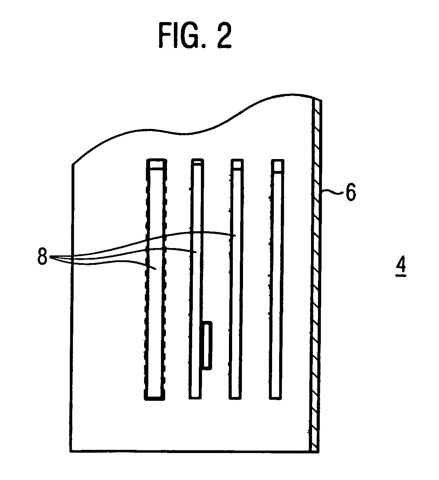

Dazu umfasst jeder der katalytischen Rekombinatoren 4, wie in der vergrößerten Darstellung in Figur 2 erkennbar ist, eine Anzahl von in einem Gehäuse 6 angeordneten Katalysatorelementen 8. Die Katalysatorelemente 8 weisen dabei jeweils eine mit einem geeignet gewählten Material, beispielsweise Palladium und/oder Platin, versehene Oberfläche auf, die in einem angrenzenden Gasgemisch für den Fall, dass dieses Gasgemisch signifikante Wasserstoffanteile von beispielsweise einigen Volumenprozent enthält, eine katalytische Rekombinationsreaktion mit im Atmosphärengas enthaltenem Sauerstoff auslösen. Dabei unterläuft der Wasserstoff mit dem Sauerstoff unter Bildung von Wasser eine exotherme Reaktion. Durch diese exotherme Reaktion werden die Katalysatorelemente 8 ihrerseits aufgewärmt, so dass in Folge des dadurch entstehenden Temperaturgefälles eine Konvektionsströmung von unten nach oben im umgebenden Gasraum entsteht.

Zur Unterstützung dieser Konvektionsströmung durch den so genannten Kamineffekt ist das die Katalysatorelemente 8 umgebende Gehäuse 6 des jeweiligen Rekombinators 4 geeignet, insbesondere kaminartig, ausgestaltet, und zur weiteren Erleichterung der dadurch entstehenden Konvektionsströmung sind die Katalysatorelemente 8 im Wesentlichen plattenartig ausgebildet und parallel zueinander angeordnet. In der Gesamtheit weist der aus diesen Komponenten gebildete Rekombinator 4 somit strukturelle Eigenschaften auf, die bei der Anwesenheit von Wasserstoff im Atmosphärengas des Sicherheitsbehälters 2 selbsttätig einen katalytischen Rekombinationsprozess starten und durch die unterstützende Wirkung der Konvektionsströmung in Folge des Kamineffekts aufrechterhalten und eine weitere Durchmischung der Atmosphäre bewirken, bis ein ausreichender Abbau des Wasserstoffs stattgefunden hat.

Das Sicherheitssystem 1 ist in seiner Gesamtheit dafür ausgelegt, bei einer Vielzahl von möglichen Störfallsszenarien unter Einschluss auch vergleichsweise unwahrscheinlicher extremaler Störfallbedingungen eine sichere und zuverlässige Rekombination des dabei möglicherweise in der Atmosphäre des Sicherheitsbehälters 2 erzeugten Wasserstoffs zu gewährleisten. Dazu ist das Sicherheitssystem 1 zum Abbau von Wasserstoff mit dem Schwerpunkt auf katalytische Rekombination ausgelegt, wobei im Bedarfsfall und insbesondere lokal und global ergänzend auch eine Zündung zündfähigen Gasgemisches erfolgen soll. Dazu sind die katalytischen Rekombinatoren 4 hinsichtlich Art, Positionierung und Dimensionierung ihrer Komponenten vorwiegend derart ausgestaltet, dass bei Gasgemischen mit einer Wasserstoffkonzentration von bis zu etwa 6 Volumenprozent oder bedarfsweise auch bis zu etwa 8 Volumenprozent noch keine Zündung erfolgt, sondern der Wasserstoffabbau durch die katalytisch ausgelöste Rekombinationsreaktion an der Oberfläche der Katalysatorelemente 8 erfolgt.

Für höhere Wasserstoffkonzentrationen ist hingegen ergänzend vorgesehen, dass die Katalysatorelemente 8 in Folge der durch die katalytische Kombinationsreaktion freigesetzten thermischen Energie derart aufgeheizt werden, dass ihre Temperatur in der Art so genannter "Hotspots" oberhalb der Zündtemperatur des Gasgemischs liegt und somit eine Zündung des Gasgemischs in der Art eines passiven Systems selbsttätig ausgelöst den Rekombinationsprozess unterstützt.

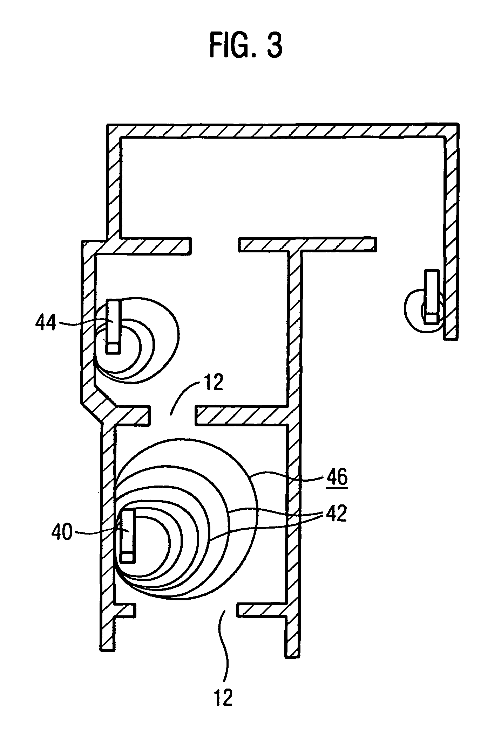

Um bei dieser Auslegung aber ein ungewolltes Übersprechen von Zündereignissen zwischen einzelnen Rekombinatoren 4 und daraus möglicherweise resultierende instabile Strömungsverhältnisse mit langen Flammbeschleunigungswegen und dergleichen zu vermeiden, sind die Rekombinatoren 4 und die diese verbindenden Strömungswege gezielt geeignet ausgestaltet. Dabei ist insbesondere dem Umstand Rechnung getragen, dass - wie der vergrößerten ausschnittsweisen Darstellung in Figur 3 entnehmbar - eine in einem ersten Rekombinator 40 gewollt oder ungewollt, durch aktiv initiierte oder ein externes Ereignis wie beispielsweise einen Dampfstoß oder dergleichen ausgelöste Zündung eine sich mit der Zeit in der Art eines Pulses ausbreitende Flammenfront 42 erzeugt. Problematisch könnte sein, wenn diese Flammenfront 42 sich bis zu einem strömungsseitig nachgeordneten weiteren Rekombinator 44 ausbreitet und dort durch den resultierenden zusätzlichen Wärmeeintrag in das Gasgemisch die Zündung auslöst. Bei einer derartigen durch eine Flammenfront induzierten Auslösung könnten nämlich die unerwünschten Übersprecheffekte mit Fammbeschleunigung, Gegenströmungen und dergleichen resultieren.

Um dem zu begegnen, ist im Sicherheitssystem 1 gezielt die Erkenntnis genutzt, dass der im ersten Rekombinator 40 durch Zündung ausgelösten Flammenfront 42 in der Art eines Gasverschiebevorgangs eine Druckwelle 46 vorläuft, die somit auch vor der Flammenfront 42 am strömungsseitig nachgeschalteten weiteren Rekombinator 44 eintrifft. Für den gewünschten hohen Sicherheitsstandard unter Vermeidung der genannten Übersprecheffekte ist das Sicherheitssystem 1 nunmehr dafür ausgelegt, dass diese Druckwelle 46 die Zündung im strömungsseitig nachgeschalteten Rekombinator 44 auslöst.

Um dies sicherzustellen, ist im Sicherheitssystem 1 der Erkenntnis Rechnung getragen, dass jeder der Rekombinatoren 4 im katalytischen Rekombinationsbetrieb, also bei vorliegender Naturkonvektion, von dem behandlungsbedürftigen Gasstrom umströmt wird, wobei in unmittelbarer Nähe der katalytischen Oberflächen der Katalysatorelemente 8 in Folge der ablaufenden Rekombinationsreaktion eine Abreicherung des Wasserstoffanteils im Gasstrom erfolgt. Im Zustand der Naturkonvektion werden die Katalysatorelemente 8 somit in der Art eines geschichteten Gasstroms direkt vom abgereichertem Gas kontaktiert, wobei in weiter entfernt liegenden Raumbereichen nicht abgereichertes Gas mit entsprechend erhöhtem Wasserstoffanteil vorliegt. In diesem Zustand der Naturkonvektion ist somit der Zündeffekt, den das erhitzte Katalysatormaterial auf den umgebenden Gasstrom ausüben kann, durch die abgereicherte Gasschicht vermindert.

Um nunmehr gezielt die Wirkung der Gasverschiebevorgänge oder der eintreffenden Druckwelle 46 im Einströmbereich des nachgeschalteten Rekombinators 44 gezielt zu nutzen, ist der Strömungsweg oder die Rekombinatoranordnung im Strömungsweg zwischen den Rekombinatoren 4 jeweils derart ausgestaltet, dass die eingehende Druckwelle im Einströmbereich des jeweiligen Rekombinators 4 Strömungsgeschwindigkeiten von mindestens einer vorgebbaren Mindestgeschwindigkeit, beispielsweise von 5m/s, vorzugsweise von mindestens 10m/s, aufweist. Dies kann beispielsweise erreicht werden, indem im Strömungsweg geeignete Raumverblockungsstellen, Drosselstellen, Blenden oder dergleichen, wie in Figur 3 durch die Verengungsstelle 12 angedeutet, vorgesehen sind. Durch die entsprechend eingestellte Gasströmungsgeschwindigkeit der eintreffenden Druckwelle werden die im Modus der Naturkonvektion gebildeten Gasschichten, insbesondere die oberflächennahe Verarmungszone, aufgebrochen, und es gelangt Gas mit nicht abgereichertem Wasserstoffanteil in direkten Kontakt mit der Oberfläche des jeweiligen Katalysatorelements 8.

Die jeweiligen Katalysatorelemente 8 sind hinsichtlich ihrer Materialwahl, Plattendicke und sonstigen strukturellen Eigenschaften unter Berücksichtigung der Kühlwirkung des vorbeiziehenden Gasstroms dabei derart ausgelegt, dass zwar im Naturkonvektionsmodus - unter Berücksichtigung der an der Oberfläche entlangstreifenden Gasschicht mit abgereichertem Wasserstoffanteil - die Aufheizung durch die exotherme Rekombinationsreaktion zu Temperaturen führt, die nicht zur Zündung des Gasgemisches führen, die aber bei Kontakt mit nicht abgereichertem Gas eine Zündung auslösen. Durch die eintreffende Druckwelle in Kontakt mit der heißen Oberfläche des Katalysatorelements 8 gebrachtes nicht abgereichertes Gas wird somit gezündet, so dass die Zündung durch die geeignete Einstellung der Gasgeschwindigkeit kontrolliert vor Eintreffen der Flammenfront 42 ausgelöst wird.

Weiterhin umfasst das Sicherheitssystem 1 ein Gebäudesprühsystem 50, über das im Bedarfsfall ein Inertisierungsmittel in den Sicherheitsbehälter 2 eingesprüht werden kann. Im Ausführungsbeispiel ist dabei eine bedarfsweise Einsprühung von Wasser vorgesehen, das angesichts der im Sicherheitsbehälter 2 im Auslegungsfall herrschenden Temperaturen nach seiner Einsprühung sofort verdampft. Der dabei gebildete Dampf inertisiert sodann die Atmosphäre im Sicherheitsbehälter 2. Wie der Darstellung nach Figur 1 entnehmbar ist, ist das Gebäudesprühsystem 50 ebenso wie eine Mehrzahl der Rekombinatoren 4 oberhalb des Hauptkreislaufs 52 der kerntechnischen Anlage angeordnet.

Das Gebäudesprühsystem 50 ist im Hinblick auf die Auslegung seiner Ansteuerung geeignet an die Rekombinatoren 4 angepasst. Im Hinblick auf die Auslösung der Einsprühung und dabei insbesondere die vorgenannten Kriterien berücksichtigt.

### Bezugszeichenliste

- 1: Sicherheitssystem
- 2: Sicherheitsbehälter
- 4: Rekombinator
- 6: Gehäuse
- 8: Katalysatorelement
- 40: Rekombinator
- 42: Flammenfront
- 44: Rekombinator
- 46: Druckwelle
- 50: Gebäudesprühsystem
- 52: Hauptkreislauf

## Patentansprüche

1. Sicherheitssystem (1) für eine kerntechnische Anlage mit einer Mehrzahl von katalytischen Rekombinatorelementer (40,44), die jeweils bei in einem anströmenden Gasstrom mitgeführtem Wasserstoff eine Rekombinationsreaktion mit Sauerstoff auslösen, wobei die Rekombinatorelemente auch als Zündelemente geeignet sind,
**dadurch gekennzeichnet, dass**
die Rekombinatorelemente und die jeweils zwei Rekombinatorelemente gasseitig verbindenden Strömungswege derart ausgestaltet sind, dass ein durch eine Zündung bei der Rekombinationsreaktion in einem ersten Rekombinatorelement (40) im Gasmedium ausgelöster Druckpuls (46) im Anströmbereich eines zweiten benachbarten Rekombinatorelements (44) einen einer Flammenfront (42) vorauseilenden Gasverschiebevorgang mit einer Strömungsgeschwindigkeit von mindestens 5 m/s auslöst, der eine verstärkte Aufheizung des zweiten Rekombinatorelements und dadurch eine Zündung des Gasstroms noch vor Eintreffen der Flammenfront am zweiten Rekombinatorelement bewirkt.

2. Sicherheitssystem (1) nach Anspruch 1, bei dem als Strömungsgeschwindigkeit für den ausgelösten Gasverschiebevorgang mindestens 10 m/s vorgegeben ist.

3. Sicherheitssystem (1) nach Anspruch 1 oder 2, bei dem das oder jedes Rekombinatorelement derart ausgelegt ist, dass im Naturkonvektionsbetrieb eine Zündung im umströmenden Gasstrom erst dann ausgelöst wird, wenn der Anteil an mitgeführtem Wasserstoff mindestens 6 Vol %, vorzugsweise mindestens 8 Vol %, beträgt.

4. Sicherheitssystem (1) nach einem der Ansprüche 1 bis 3, mit einem Gebäudesprühsystem (50) (50), insbesondere zur bedarfsweisen Wassereinspritzung.

5. Sicherheitssystem (1) nach Anspruch 4, bei dem die Rekombinatorelemente und das Gebäudesprühsystem (50) derart aufeinander abgestimmt sind, dass im Ansprechfall erst die Ausbildung von Hochtemperatur Soll-Zündzonen und nachfolgend die Dampf-Deinertisierung erfolgt.

6. Kemtechnische Anlage mit einem Sicherheitssystem nach einem der Ansprüche 1 bis 5.

## Claims

1. A safety system (1) for a nuclear power plant, having a plurality of catalytic recombination elements (40, 44), each of which initiates with hydrogen carried in an inflowing gas flow a recombination reaction with oxygen, the recombination elements also being suitable as ignition elements,
**characterized in that**
the recombination elements and the flow paths connecting two recombination elements each on the gas side are designed in such a manner that a pressure pulse (46) which is initiated in the gas medium by an ignition upon the recombination reaction in a first recombination element (40) initiates in the inflowing area of an adjacent second recombination element (44) a gas displacement process leading a flame front (42), with a flow velocity of at least 5 m/s, which causes an increased heating up of the second recombination element and thus, an ignition of the gas flow, even before the flame front arrives at the second recombination element.

2. The safety system (1) of claim 1, wherein a flow velocity of at least 10 m/s is predefined for the initiated gas displacement process.

3. The safety system (1) of claim 1 or 2, wherein the, or each, recombination element is designed such that in natural convection operation, an ignition of the gas flow flowing around will only be initiated when the share of carried hydrogen amounts to at least 6 % by volume, preferably at least 8 % by volume.

4. The safety system (1) according to any of claims 1 to 3, having a building spraying system (50), in particular for water injection in case of need.

5. The safety system (1) of claim 4, wherein the recombination elements and the building spraying system (50) are adapted to one another in such a manner that in case of response, first of all, predetermined high-temperature ignition zones are formed, and afterwards, the steam is de-inertized.

6. A nuclear power plant provided with a safety system according to any of claims 1 to 5.

## Revendications

1. Système de sécurité (1) pour une centrale nucléaire, ayant une pluralité d'éléments de recombinaison (40, 44) catalytiques, chacun desquels déclenche avec l'hydrogène entraîné dans un courant affluant de gaz une réaction de recombinaison avec de l'oxygène, les éléments de recombinaison étant également appropriés comme éléments d'amorçage,
**caractérisé en ce que**
les éléments de recombinaison et les chemins de courant qui relient à chaque fois deux éléments de recombinaison du côté gaz sont conçus de manière à ce qu'une impulsion de pression (46) qui est déclenchée dans le milieu de gaz par un amorçage lors de la réaction de recombinaison dans un premier élément de recombinaison (40) déclenche dans la zone d'affluence d'un deuxième élément de recombinaison (44) adjacent un processus de déplacement de gaz qui est en avance d'un front de flamme (42), à une vitesse de courant d'au moins 5 m/s, qui cause un échauffement augmenté du deuxième élément de recombinaison et ainsi, un amorçage du courant de gaz, avant même que le front de flamme arrive au deuxième élément de recombinaison.

2. Système de sécurité (1) selon la revendication 1, dans lequel une vitesse de courant d'au moins 10 m/s est prédéfinie pour le processus de déplacement de gaz déclenché.

3. Système de sécurité (1) selon la revendication 1 ou 2, dans lequel le, ou chaque, élément de recombinaison est conçu de manière à ce que dans le fonctionnement de convection naturelle, un amorçage du courant de gaz s'écoulant ne soit déclenché que lorsque la part d'hydrogène entraîné s'élève à au moins 6 % volumétriques, de préférence à au moins 8 % volumétriques.

4. Système de sécurité (1) selon l'une quelconque des revendications 1 à 3, ayant un système de pulvérisation de bâtiment (50), en particulier pour l'injection d'eau en cas de besoin.

5. Système de sécurité (1) selon la revendication 4, dans lequel les éléments de recombinaison and le système de pulvérisation de bâtiment (50) sont adaptés l'un à l'autre de manière à ce que, en cas de réponse, des zones destinés à l'amorçage, de haute température, sont d'abord formées, and après, la vapeur est dé-inertisée.

6. Centrale nucléaire pourvue d'un système de sécurité selon l'une quelconque des revendications 1 à 5.
